(19) Europäisches Patentamt
European Patent Office
Office européen des brevets

(11) **EP 3 137 857 B1**

(12) **EUROPÄISCHE PATENTSCHRIFT**

(45) Veröffentlichungstag und Bekanntmachung des Hinweises auf die Patenterteilung:
**19.08.2020  Patentblatt 2020/34**

(21) Anmeldenummer: **14720976.1**

(22) Anmeldetag: **02.05.2014**

(51) Int Cl.:
*G01F 23/284* (2006.01)    *G01F 22/00* (2006.01)
*G01S 13/88* (2006.01)    *G01S 13/89* (2006.01)

(86) Internationale Anmeldenummer:
**PCT/EP2014/059003**

(87) Internationale Veröffentlichungsnummer:
**WO 2015/165548 (05.11.2015 Gazette 2015/44)**

(54) **FÜLLSTANDMESSUNG DURCH OBERFLÄCHENTOPOLOGIEBESTIMMUNG MIT DREHZENTRUMSKORREKTUR**

FILLING LEVEL MEASUREMENT BY SURFACE TOPOLOGY DETERMINITION AND WITH PIVOT POINT COORDINATE CORRECTION

MESURE DE NIVEAU PAR DÉTERMINATION DE LA TOPOLOGIE DE SURFACE ET CORRECTION DU CENTRE DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.03.2017  Patentblatt 2017/10**

(73) Patentinhaber: **VEGA Grieshaber KG
77709 Wolfach (DE)**

(72) Erfinder: **HOFERER, Christian
77654 Offenburg (DE)**

(74) Vertreter: **Maiwald Patent- und Rechtsanwaltsgesellschaft mbH
Elisenhof
Elisenstraße 3
80335 München (DE)**

(56) Entgegenhaltungen:
**EP-A1- 2 128 576     WO-A2-2012/155050
US-A- 4 068 156     US-A1- 2010 019 952**

**Beschreibung**

Gebiet der Erfindung

Die Erfindung betrifft die Füllstandmessung in Behältern, auf Halden oder Bunkern durch die Bestimmung der Topologie der Oberfläche des Füllgutes oder Schüttgutes. Insbesondere betrifft die Erfindung ein Füllstandmessgerät zur Bestimmung einer Topologie einer Oberfläche eines Füllgutes oder Schüttgutes, ein Füllstandmessverfahren, welches die Topologie der Oberfläche eines Füllgutes oder Schüttgutes zur Berechnung des Füllstands bestimmt, ein Programmelement und ein computerlesbares Medium.

Hintergrund

Zur Bestimmung eines Füllstands eines zähflüssigen, granularen oder grobkörnigen Füllgutes oder Schüttgutes (im Folgenden "Füllgut" genannt) ist es vorteilhaft, die Form der Oberfläche des Füllgutes zu erfassen. Da die Oberfläche des Füllgutes uneben sein kann und beispielsweise Abzugtrichter oder Schüttkegel aufweisen kann, ist diese Kenntnis wichtig, um den tatsächlichen Füllstand oder die Masse des Füllgutes exakt bestimmen zu können.

Auch im Bereich der Objektüberwachung oder Massestromerfassung kann die Kenntnis der Oberflächentopologie des zu überwachenden Gutes vorteilhaft sein.

Derartige Füllstandmessgeräte können ausgeführt sein, die Oberflächentopologie des Füllgutes zu bestimmen, indem sie die Oberfläche abscannen. Dies kann durch digitale Strahlumformung oder durch ein mechanisches Verstellen der Hauptabstrahlachse der Sende-/Empfangsantenne des Füllstandmessgeräts geschehen. Zur exakten Berechnung der Oberflächentopologie ist es erforderlich, dass die Auswerteeinheit des Füllstandmessgeräts zu jedem Zeitpunkt der Messung die Richtung der Hauptabstrahlachse der Sende-/Empfangsantenne des Füllstandmessgeräts kennt. Es hat sich jedoch gezeigt, dass selbst bei genauer Kenntnis der Richtung der Hauptabstrahlachse die Berechnung der Oberflächentopologie des Füllgutes ungenau sein kann.

Zusammenfassung der Erfindung

Es ist eine Aufgabe der Erfindung, die Füllstandbestimmung in Behältern, auf Halden oder Bunkern durch Bestimmung der Oberflächentopologie des Füllgutes oder Schüttgutes zu verbessern.

Diese Aufgabe wird durch die Merkmale der unabhängigen Patentansprüche gelöst. Weiterbildungen der Erfindung ergeben sich aus den abhängigen Patentansprüchen und der folgenden Beschreibung.

Gemäß einem ersten Aspekt der Erfindung ist ein Füllstandmessgerät zur Bestimmung einer Topologie einer Oberfläche eines Füllgutes oder Schüttgutes angegeben. Das Füllstandmessgerät, bei der es sich beispielsweise um ein Füllstandradar handelt, weist eine Antenneneinheit und eine Auswerteeinheit (Berechnungseinheit) auf. Die Antenneneinheit dient dem Abstrahlen eines Messsignals in Richtung der Oberfläche des Füllgutes in einer vom Füllstandmessgerät veränderbaren Richtung einer Hauptabstrahlachse der Antenneneinheit relativ zur Oberfläche des Füllgutes, so dass ein Abtasten der Oberfläche erfolgt. Beispielsweise kann die Antenne bzw. das komplette Füllstandmessgerät verkippt werden, so dass die Oberfläche des Füllgutes abgescannt werden kann. Beispielsweise wird die Antenne hierfür auf einer Kugelschale bewegt. Auch ist es möglich, dass eine Arrayantenne vorgesehen ist, mit welcher die Hauptabstrahlachse der Antenne mittels digitaler Strahlumformung verändert werden kann. Auch kann eine Kombination dieser beiden Prinzipien (mechanisches Verstellen bzw. Verkippen der Antenne und digitale Strahlumformung) vorgesehen sein.

Darüber hinaus ist die Antenne ausgeführt, das an der Füllgutoberfläche reflektierte Messsignal zu empfangen.

Die Auswerteeinheit dient dem Bestimmen der Topologie der Oberfläche des Füllgutes aus dem empfangenen, an der Füllgutoberfläche reflektierten Messsignal und einem Abstand eines Ursprungs des Messsignals von einem Drehzentrum der Hauptabstrahlachse der Antenneneinheit. Zusätzlich können die Richtung der Hauptabstrahlachse bzw. die Drehwinkel der Antenne zur Topologiebestimmung mit einbezogen werden.

Unter dem Ursprung des Messsignals ist hierbei der Ort zu verstehen, der einem Abstand der Füllgutoberfläche von der Antenne von 0 m entsprechen würde. Dieser Ursprung stimmt somit im Regelfall mit dem Ursprung der Echokurve, die von dem Füllstandmessgerät erzeugt wird, überein. Je nach Ausprägung des Messinstruments, welches das Messsignal erzeugt und aussendet, kann als Ursprung des Messsignals auch eine andere markante Stelle der Echokurve (z.B. die Reflexion der elektromagnetischen Welle an der Antenne selbst) dienen. Die Festlegung des Ursprungs des Messsignals auf einen Distanzwert von 0 m kann über ein werksseitiges Eichverfahren erfolgen.

Unter dem Drehzentrum der Hauptabstrahlachse ist der Drehpunkt zu verstehen, um den die Hauptabstrahlachse während des Abscannens der Oberfläche des Füllgutes verkippt wird. Grundsätzlich kann dieses Drehzentrum während des Verkippens der Hauptabstrahlachse seine Position ändern, je nach verwendeter Mechanik. In diesem Fall ist die durchzuführende Berechnung der Topologie der Füllgutoberfläche inklusive "Ursprungskompensation" etwas aufwändiger als die weiter unten beschriebene.

Indem der Abstand des Ursprungs des Messsignals vom (aktuellen) Drehzentrum der Hauptabstrahlachse bei der Berechnung der Topologie der Oberfläche des Füllgutes berücksichtigt wird, kann die Topologie mit höherer Genauigkeit berechnet werden, was im nächsten Schritt zu einer genaueren Füllstandberechnung bzw. Masse- oder Volumenberechnung des Füllgutes führt. Letztendlich handelt es sich hierbei um die Kompensation eines Bezugssystems.

Durch die Berücksichtigung des Abstands des Ursprungs vom Drehzentrum der Hauptabstrahlachse ist es möglich, die Verstelleinrichtung der Antenneneinheit, die zum Abscannen der Oberfläche verwendet wird, auf einfache Weise mechanisch auszuführen. Unregelmäßigkeiten, die aufgrund dieser einfachen mechanischen Ausführung beim Scannen der Oberfläche auftreten, können rechnerisch kompensiert werden, insbesondere wenn Drehzentrum und Messsignalursprung nicht zusammenfallen oder auch falls die Drehachsen der Antenne nicht orthogonal aufeinander stehen.

Beispielsweise können alternativ verschiedene mechanische oder elektrische Verstelleinrichtungen zur Änderung der Richtung der Hauptabstrahlachse der Antenneneinheit verwendet werden, ohne dass das Messergebnis hierdurch negativ beeinflusst werden würde, da die Auswerteeinheit die Verschiebung des Drehzentrums der Hauptabstrahlachse zum Ursprung des Messsignals bei der Topologiebestimmung kompensiert.

Auch falls die Antennenabstrahlrichtung in zumindest einer Richtung durch digitale Strahlumformung (Digital Beamforming) verändert wird, kann anschließend eine Kompensation der Eigenschaft, dass der Ursprung der elektromagnetischen Welle nicht im Drehzentrum liegt, erfolgen.

Die oben beschriebene Kompensation eines Berechnungsfehlers bei der Topologiebestimmung kann durch eine mathematische Transformation erfolgen. Mit den so aufbereiteten Daten lässt sich die Topologie einer Schüttgutoberfläche mit höherer Genauigkeit abbilden und das Volumen des Füllgutes berechnen.

Gemäß einer Ausführungsform der Erfindung ist die Auswerteeinheit ausgeführt, beim Bestimmen der Topologie der Oberfläche des Füllgutes oder Schüttgutes die Eigenschaft des Füllstandmessgeräts zu kompensieren, dass der Ursprung des Messsignals nicht im Drehzentrum der Hauptabstrahlachse der Antenneneinheit liegt.

Gemäß einer weiteren Ausführungsform der Erfindung ist das Füllstandmessgerät zur Rotation der Hauptabstrahlachse der Antenneneinheit um eine Drehachse der Hauptabstrahlachse ausgeführt, welche das Drehzentrum schneidet.

Gemäß einer weiteren Ausführungsform der Erfindung ist das Füllstandmessgerät zum Ändern der Richtung der Hauptabstrahlachse der Antenneneinheit durch digitale Strahlumformung und/oder Verkippen der Antenneneinheit ausgeführt. Insbesondere kann es vorgesehen sein, dass eine Kombination aus digitaler Strahlumformung und Verkippung vorgesehen ist.

Gemäß einer weiteren Ausführungsform der Erfindung weist das Füllstandmessgerät eine Eingabeeinrichtung zur benutzerseitigen Eingabe des Abstands des Ursprungs des Messsignals vom Drehzentrum der Hauptabstrahlachse auf. Dieser Abstand kann beispielsweise vermessen werden oder durch Eichung festgestellt werden.

Gemäß einer weiteren Ausführungsform der Erfindung liegt der Auswerteeinheit der Abstand des Drehzentrums zum Ursprung des Messsignals in kartesischen Koordinaten vor, wohingegen die Richtung der Hauptabstrahlachse der Antenneneinheit beispielsweise in Kugelkoordinaten vorliegt.

Gemäß einer weiteren Ausführungsform der Erfindung ist das Füllstandmessgerät zur automatischen Bestimmung des Abstands des Ursprungs des Messsignals vom Drehzentrum der Hauptabstrahlachse der Antenneneinheit bei bekannter Topologie der Oberfläche des Füllgutes oder Schüttgutes ausgeführt. Somit kann vorgesehen sein, dass dieser Abstand durch eine Eichmessung bei bekannter Oberflächentopologie bestimmt wird.

Dies ist insbesondere dann vorteilhaft, wenn sich dieser Abstand während des Abscannens der Oberfläche ändert, wenn die Antenne neu justiert wird, wenn eine Antenne ausgetauscht wird, etc.

Gemäß einer weiteren Ausführungsform der Erfindung stammt das Messsignal von einem FMCW Radar.

Gemäß einer weiteren Ausführungsform der Erfindung stammt das Messsignal von einem Füllstandradar, das nach dem Puls-Laufzeitverfahren arbeitet.

Gemäß einem weiteren Aspekt der Erfindung ist ein Füllstandmessverfahren angegeben, welches zur Bestimmung des Füllstands eines Füllgutes oder Schüttgutes die Topologie einer Oberfläche des Füllgutes oder Schüttgutes bestimmt. Hierbei wird zunächst ein Messsignal in Richtung der Oberfläche des Füllgutes oder Schüttgutes durch eine Antenneneinheit abgestrahlt. Die Richtung der Hauptabstrahlachse der Antenneneinheit relativ zur Oberfläche wird während des Abstrahlens des Messsignals variiert, so dass ein Abtasten der Oberfläche erfolgt. Auch kann vorgesehen sein, dass eine Sequenz an Messsignalen abgestrahlt wird und die Veränderung der Richtung der Hauptabstrahlachse der Antenneneinheit lediglich in den Pausen zwischen der Abstrahlung der einzelnen Messsignale erfolgt. Im Regelfall wird die Richtungsänderung der Hauptabstrahlachse jedoch kontinuierlich und nicht schrittweise erfolgen.

Das an der Füllgutoberfläche reflektierte Messsignal wird von der Antenneneinrichtung des Messgeräts empfangen und daraufhin die Topologie der Oberfläche des Füllgutes oder Schüttgutes aus dem empfangenen, an der Füllgutoberfläche reflektierten Messsignal und einem Abstand eines Ursprungs des Messsignals von einem Drehzentrum der Hauptabstrahlachse der Antenneneinheit bestimmt.

Gemäß einem weiteren Aspekt der Erfindung ist ein Programmelement angegeben, das, wenn es auf einem Prozessor eines Füllstandmessgeräts ausgeführt wird, das Füllstandmessgerät veranlasst, die oben und im Folgenden beschriebenen Verfahrensschritte durchzuführen.

Gemäß einem weiteren Aspekt der Erfindung ist ein computerlesbares Medium angegeben, auf dem ein oben beschriebenes Programmelement gespeichert ist.

Füllstandmessgeräte zur Bestimmung der Topologie einer Oberfläche eines Füllguts sind aus EP 2 128 576 und US 2010/0019952 bekannt.

Im Folgenden werden mit Verweis auf die Figuren Ausführungsbeispiele der Erfindung beschrieben.

Kurze Beschreibung der Figuren

Fig. 1 zeigt ein Füllstandmessgerät sowie die Oberfläche eines zu vermessenden Schüttgutes.

Fig. 2 zeigt das ortsfeste Bezugssystem eines Schüttgutes sowie das körperfeste Bezugssystem eines Füllstandmessgeräts.

Fig. 3 zeigt ein Füllstandmessgerät mit dem Ursprung des Messsignals, der Hauptabstrahlachse der Antenneneinheit, einer Rotationsachse sowie einem Drehzentrum der Hauptabstrahlachse.

Fig. 4 zeigt ein Flussdiagramm eines Verfahrens gemäß einem Ausführungsbeispiel der Erfindung.

Detaillierte Beschreibung von Ausführungsbeispielen

Die Darstellungen in den Figuren sind schematisch und nicht maßstäblich.

Werden in der folgenden Figurenbeschreibung gleiche Bezugszeichen verwendet, so bezeichnen diese gleiche oder entsprechende Elemente. Gleiche oder entsprechende Elemente können aber auch durch unterschiedliche Bezugszeichen bezeichnet sein.

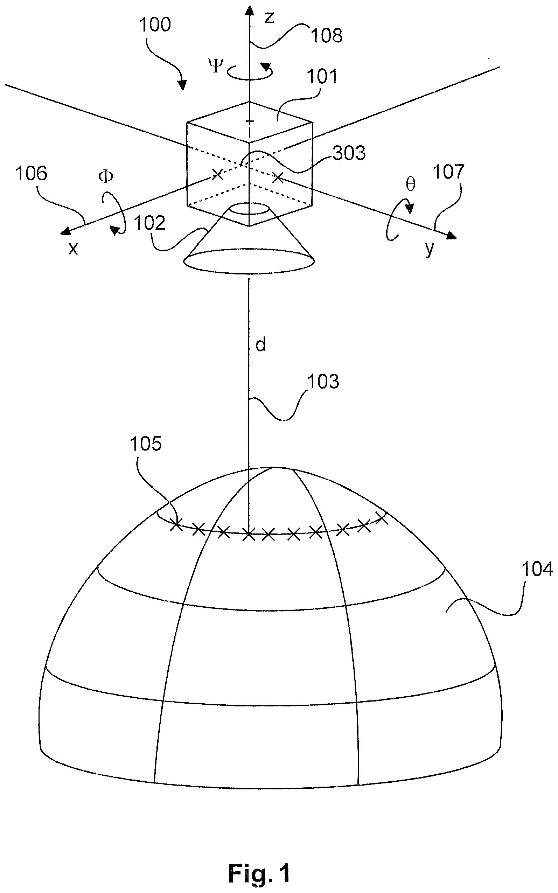

Fig. 1 zeigt ein Füllstandmessgerät sowie die Oberfläche eines zu vermessenden Schüttgutes. Ziel der Erfindung soll es sein, die Oberfläche eines Füllgutes zu bestimmen, um in einem weiteren Schritt gegebenenfalls das Volumen oder - bei Kenntnis der Dichte des Füllgutes - das Gewicht des Füllgutes zu berechnen. Insbesondere bei Schüttgütern bilden sich Schüttkegel oder Trichter (wenn das Füllgut in einem Behälter von unten abgezogen wird), die ein einfaches Füllstandmessgerät nicht sauber abbilden kann, da dieses nur einen einfachen Entfernungswert zwischen Sensor und Schüttgüter ermittelt.

Möchte man jedoch die Oberfläche des Füllguts erfassen, so bietet sich es an, den Sensor geeignet zu schwenken und somit die Oberfläche durch einzelne Entfernungsberechnungen abzutasten. Dies ist in Fig. 1 skizziert. Ein Füllstandmessgerät 100, welches ein Gehäuse 101, das die Signalerzeugungselektronik und die Auswerteelektronik beherbergt, und eine Antenneneinheit 102 aufweist, tastet z.B. zeilenweise einen Schüttkegel ab.

Das Füllstandmessgerät selbst bestimmt immer nur einen einfachen Distanzwert 103 (d) zu jedem Abtastpunkt bzw. Messpunkt 105. Die Richtung, in welcher der Distanzwert erfasst werden soll, kann durch Schwenken der Sende- oder Empfangseinheit 102 (z.B. einer Antenne bei Radarmessgeräten) erfolgen. In der weiteren Ausführung wird ein reines mechanisches Schwenken der Antenneneinheit oder des gesamten des Füllstandmessgeräts beschrieben.

Bei einem Radarsensor kann alternativ oder zusätzlich zum mechanischen Verschwenken der Antenneneinheit die Abstrahlrichtung der Antenne durch digital Beam Forming verändert werde. Das nachfolgend beschriebene Verfahren bleibt aber hierbei weiterhin gültig.

Im Beispiel aus Fig. 1 erreicht man durch Drehung des Sensors 100 um die x und y Achse 106, 107 ein vollständiges Abtasteten der Topologie. Im Regelfall kann es sich als schwierig gestalten, dass sich alle Drehachsen in einem Drehzentrum 303 treffen und sich gleichzeitig der Nullpunkt bzw. der Ursprung des Abstandsensors (also der "Ort" der Sende- und Empfangseinheit) ebenfalls in diesem Drehzentrum befindet.

Vorteilhaft verwendet das nachfolgende Verfahren eine Berechnungsvorschrift, die es ermöglicht, aus den reinen Distanzwerten, die der Sensor ermittelt hat, und den Drehwinkeln, um welche der Sensor aus seiner Nulllage gedreht wurde, die Topologie des Füllgutes abzubilden.

Im Folgenden wir eine Berechnungsvorschrift zur Berechnung der vom Füllstandmessgerät erfassten Sensorwerte in ein 3D-Bild beschrieben:

Sind die Drehwinkel ($\phi$, $\theta$, $\psi$) der einzelnen Achsen bekannt (z.B. mittels Inkrementalgeber), so kann mittels der im Folgenden beschriebenen Berechnungsvorschrift die Oberfläche abgebildet werden.

Ziel soll es sein, dass die Oberfläche in ein kartesisches Koordinatensystem überführt wird, um die Topologie zu visualisieren oder weitere Berechnungen davon abzuleiten (z.B. Volumenberechnung). Zudem erlaubt es die Berechnungsvorschrift, dass der Ursprung der elektromagnetischen Welle bzw. der Nullpunkt des Distanzmessers bzw. Ort der Sende oder Empfangseinrichtung nicht identisch mit dem Drehzentrum sein müssen.

Im Allgemeinen lässt sich festhalten, dass bei einer Rotation (Schwenkung) bzw. Translation (Bewegung) des Sensors sich das Bezugsystem des Sensors, in welchem er die Distanzwerte erfasst, gegenüber dem ortsfesten Bezugsystem ändert. Das ortsfeste Bezugsystem wir dabei z.B. durch den Behälter oder die Halde definiert. Die Aufhängung des Sensors hat einen festen Punkt im ortsfesten Bezugsystem.

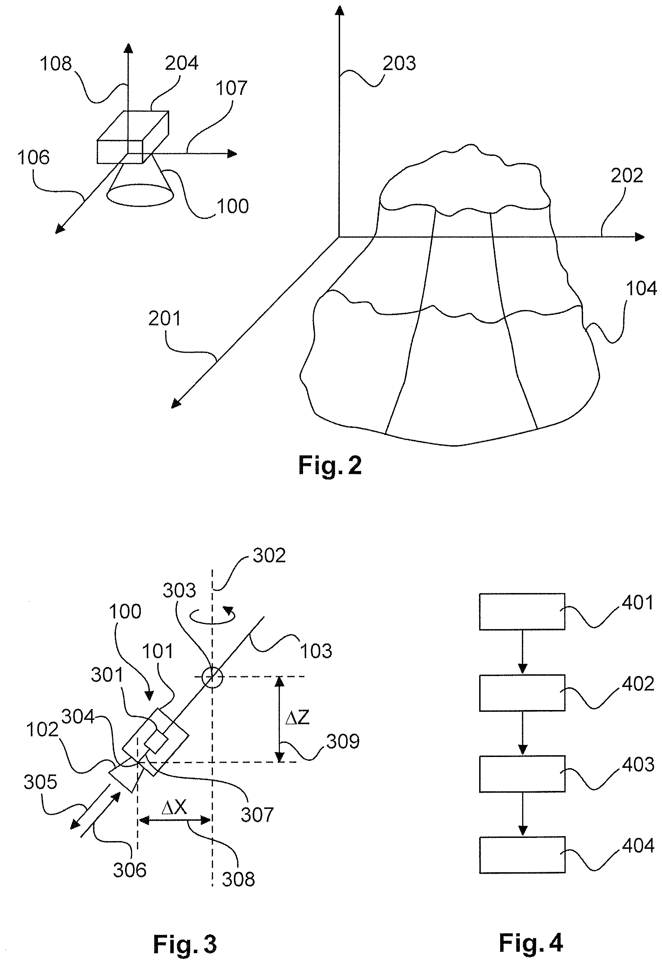

Fig. 2 soll diesen Sachverhalt näher verdeutlichen. Die Bezugzeichen 201, 202 und 203 bezeichnen die x-, y- und z-Achse des ortsfesten Bezugsystems, in welchem sich das zu messende Füllgut (hier ein Schüttkegel) 104 befindet. Der Sensor 100 mit seiner mechanischen Drehvorrichtung 204 definiert sein eigenes (körperfestes) Bezugsystem mit den x-, y- und z-Achsen 106, 107 und 108, welches bei einer Rotation bzw. Translation durch die mechanische Drehvorrichtung gegenüber dem ortsfesten Bezugsystem verschoben wird.

Das Füllstandmessgerät 100 misst hier nur einen Distanzwert zum nächsten Punkt im ortsfesten Koordinatensystem. Wurde noch keine Drehung durchgeführt, d.h. die Drehwinkel ($\phi$, $\theta$, $\psi$) sind alle gleich Null, so misst der Distanzsensor definitionsgemäß in z-Richtung 203. Die Raumachsen des ortsfesten und körperfesten Bezugsystems sind dann parallel. Dies ist selbstverständlich nur eine Möglichkeit, wie die Achsen der beiden Systeme definiert werden können bzw. wie der Sensor an der mechanischen Drehvorrichtung in der Nulllage befestigt wurde.

Mathematisch lässt sich die Rotation und Translation folgendermaßen beschreiben:

Bezogen auf das ortsfeste Bezugssystem 201, 202, 203 lässt sich eine Drehung des Sensors bzw. der Sensorantennenvorrichtung um die x-Achse mit der Drehmatrix Rx beschrieben. Eine Drehung um die y- bzw. z-Achse wird mit den Matrizen Ry und Rz beschrieben.

$$R_x = \begin{pmatrix} 1 & 0 & 0 \\ 0 & \cos\phi & -\sin\phi \\ 0 & \sin\phi & \cos\phi \end{pmatrix} \quad R_y = \begin{pmatrix} \cos\theta & 0 & \sin\theta \\ 0 & 1 & 0 \\ -\sin\theta & 0 & \cos\theta \end{pmatrix} \quad R_z = \begin{pmatrix} \cos\psi & -\sin\psi & 0 \\ \sin\psi & \cos\psi & 0 \\ 0 & 0 & 1 \end{pmatrix}$$

Durch die Multiplikation der einzelnen Matrizen erhält man z.B. folgende Matrix, die eine vollständige Drehung um die drei Raumwinkel beschreibt.

$$R = \begin{pmatrix} \cos\theta\cos\psi & -\cos\phi\sin\theta + \sin\phi\sin\theta\sin\psi & \sin\phi\sin\psi + \cos\phi\sin\theta\cos\psi \\ \cos\theta\sin\psi & \cos\phi\cos\psi + \sin\phi\sin\theta\sin\psi & -\sin\phi\cos\psi + \cos\phi\sin\theta\sin\psi \\ -\sin\theta & \sin\phi\cos\theta & \cos\phi\cos\theta \end{pmatrix}.$$

Zur besseren Übersicht wird die Matrix im Folgenden so abgekürzt:

$$R = \begin{pmatrix} R_{11} & R_{12} & R_{13} \\ R_{21} & R_{22} & R_{23} \\ R_{31} & R_{32} & R_{33} \end{pmatrix}$$

Mit der Matrix R lässt sich nun eine ortsfeste Drehung des Distanzsensors beschreiben. Liegt jedoch der Ursprung der elektromagnetischen Welle (z.B. die Antenne bei einem Radarsensor) außerhalb des Drehzentrums, liegt neben der reinen Rotation auch eine Translation vor, die nicht vernachlässigt werden darf.

Eine mögliche Verkettung von Translation und Rotation kann mit nachfolgender Formel beschrieben werden. Die Matrix R wurde hierbei um eine Zeile und eine Spalte erweitert. R11 bis R33 entsprechen jedoch der ursprünglichen Matrix R. Die Erweiterung ist hilfreich, um die Rotation und Translation in einem Schritt durchführen zu können und den Sachverhalt in kompakter Schreibweise abzubilden. Die Translation wird mit den Größen $\Delta x$, $\Delta y$, $\Delta z$ beschrieben. $\Delta x$ beschreibt dabei eine Translation in x-Richtung, $\Delta y$ eine in y-Richtung und $\Delta z$ sinngemäß in z-Richtung.

$$
\begin{pmatrix} x' \\ y' \\ z' \\ 1 \end{pmatrix} = \begin{pmatrix} 1 & 0 & 0 & \Delta_x \\ 0 & 1 & 0 & \Delta_y \\ 0 & 0 & 1 & \Delta_z \\ 0 & 0 & 0 & 1 \end{pmatrix} \cdot \begin{pmatrix} R_{11} & R_{12} & R_{13} & 0 \\ R_{21} & R_{22} & R_{23} & 0 \\ R_{31} & R_{32} & R_{33} & 0 \\ 0 & 0 & 0 & 1 \end{pmatrix} \cdot \begin{pmatrix} x \\ y \\ z \\ 1 \end{pmatrix}
$$

$$
= \begin{pmatrix} R_{11} & R_{12} & R_{13} & \Delta_x \\ R_{21} & R_{22} & R_{23} & \Delta_y \\ R_{31} & R_{32} & R_{33} & \Delta_z \\ 0 & 0 & 0 & 1 \end{pmatrix} \cdot \begin{pmatrix} x \\ y \\ z \\ 1 \end{pmatrix}.
$$

## Formel 3

Die gestrichenen Größen x', y' und z' sind die Koordinaten im ortsfesten Koordinatensystem, das durch die Achsen 201, 202 und 203 beschrieben wird. Die ungestrichenen Größen x, y und z sind die Koordinaten im körperfesten Koordinatensystem (vom Sensor aus gesehen). Die Drehwinkel ($\phi, \theta, \psi$), welche in den Größen R11 bis R33 verrechnet wurden, und die Translation $\Delta x$, $\Delta y$, $\Delta z$ zeigen die Drehung vom ortsfesten System ins körperfeste System.

Vollständiges Beispiel mit einigen Zahlenwerten:

Die Messvorrichtung sei wie in Fig. 2 aufgebaut. Der Sensor messe einen Distanzwert d in z-Richtung des körperfesten Koordinatensystems.

$$
\begin{pmatrix} x \\ y \\ z \\ 1 \end{pmatrix} = \begin{pmatrix} 0 \\ 0 \\ -d \\ 1 \end{pmatrix}
$$

Der Ursprung der elektromagnetischen Welle liege im körperfesten System aufgrund des Mechanischen Aufbaus um $\Delta z$ = k aus dem Drehzentrum verschoben. $\Delta y$, $\Delta z$ seien zur besseren Übersicht gleich Null.

Eine Drehung um die z-Achse bewirkt bei diesem Aufbau keinen

Informationsgewinn. Somit gilt $\psi$ = 0. Die Aufhängung des Sensors befinde sich im Ursprung des raumfesten Koordinatensystems (hier weicht die Skizze Fig. 2 von der Berechnung ab). Die Definition führt aber dazu, dass $\Delta x$, $\Delta y$ = 0 sind und $\Delta z$ einfach k ist.

Formel 3 vereinfacht sich dann zu:

$$
\begin{aligned}
x' &= R_{13} \cdot d &&= -\cos\phi \cdot \sin\theta \cdot d \\
y' &= -R_{23} \cdot d &&= \sin\phi \\
z' &= -R_{33} \cdot d + k &&= -\cos\phi \cos\theta \cdot d + k
\end{aligned}
$$

Im einfachsten Fall seien nun die Drehwinkel ($\phi, \theta$) gleich null. Der Sensor misst folglich einen Distanzwert nach unten, was auch in den Formeln deutlich wird. Auch zu erkennen ist die Translation um den Wert k, der sich aus dem Versatz zwischen Ursprung der Welle und Drehzentrum ergibt.

$$x' = 0$$
$$y' = 0$$
$$z' = d + k$$

Ein weiterer Zahlenwert sei für $\phi$ und $\theta$ zu 45° gegeben.

$$x' = -0{,}5 \qquad \cdot \qquad d$$
$$y' = \sqrt{2}/2 \qquad \cdot \qquad d$$
$$z' = -0{,}5 \qquad \cdot \qquad d \quad + \quad k$$

In dem Beispiel wurde folglich gezeigt, wie es möglich ist, die Distanzwerte eines einfachen Distanzsensors, der gedreht wird, jedoch nicht im Drehzentrum liegt, in Raumpunkt des ortsfesten Bezugssystems zu überführen.

In einem 3D-Plot lassen sich nur die gestrichenen Größen korrekt visualisieren. Hierauf können dann weitere Berechnungen erfolgen, z.B. des Volumens des Schüttkegels durch Integration oder eine Objekterkennung.

Fig. 3 zeigt ein Füllstandmessgerät 100 mit einer Antenneneinheit 102 und einer Auswerteeinheit 301, welche über einen Signalpfad 307 miteinander verbunden sind. In Punkt 304 an der Antennenbasis befindet sich der Ursprung des Messsignals. Dieser Ursprung kann sich auch an einem anderen Ort befinden und hängt letztendlich mit der Eichung des Füllstandmessgeräts zusammen, kann also grundsätzlich rechnerisch verändert werden.

Die Antenne 102 sendet ein Messsignal 305 zur Füllgutoberfläche aus, welches von der Füllgutoberfläche reflektiert und dann als Messsignal 306 an die Antenneneinheit zurückgesendet und von ihr empfangen wird.

Das Füllstandmessgerät 100 oder zumindest die Antenneneinheit 102 kann um die Achse 302 rotiert werden. Durch das Drehzentrum 303 läuft eine weitere Rotationsachse, die senkrecht zur Zeichenebene verläuft und durch ein Kreissymbol symbolisiert ist. Auch um diese Achse kann das Füllstandmessgerät bzw. die Antenne verschwenkt werden. Auf diese Weise ist es möglich, dass die Hauptabstrahlachse 103 der Antenneneinheit 102 die gesamte Oberfläche des Füllgutes abscannen kann.

Allerdings befindet sich der Drehpunkt 303 entfernt vom Ursprung 304 des Messsignals 305. Dieser Abstand kann durch die kartesischen Koordinaten $\Delta$x 308 und $\Delta$z 309 angegeben werden. Die y-Achse verläuft senkrecht zur Zeichenebene und $\Delta$y ist im Fall der Fig. 3 gleich 0.

Fig. 4 zeigt ein Flussdiagramm eines Verfahrens gemäß einem Ausführungsbeispiel der Erfindung. In Schritt 401 erfolgt ein Abstrahlen des Messsignals in Richtung der Füllgutoberfläche durch eine Antenneneinheit. In Schritt 402 wird die Antenneneinheit kontinuierlich verkippt und/oder es erfolgt eine digitale Strahlumformung, so dass letztendlich die Richtung der Hauptabstrahlachse der Antenneneinheit relativ zur Oberfläche des Füllgutes verändert wird. In Schritt 403 wird (über einen längeren Zeitraum) das reflektierte Messsignal aufgenommen und in Abhängigkeit von der Richtung der Hauptabstrahlachse der Antenneneinheit sowie im jeweiligen Abstand zwischen Ursprung des Messsignals und Drehzentrum der Hauptabstrahlachse ausgewertet. Aus diesen Daten wird dann die Schüttgutoberflächentopologie bestimmt, was letztendlich eine genauere Bestimmung des Füllstands/Schüttgutvolumens/Schüttgutmasse ermöglicht.

**Patentansprüche**

1. Füllstandmessgerät zur Bestimmung einer Topologie einer Oberfläche eines Füllgutes oder Schüttgutes, das Füllstandmessgerät (100) aufweisend:

   eine Antenneneinheit (102) zum Abstrahlen eines Messsignals (305) in Richtung der Oberfläche des Füllgutes oder Schüttgutes in einer vom Füllstandmessgerät veränderbaren Richtung einer Hauptabstrahlachse (103) der Antenneneinheit relativ zur Oberfläche, so dass ein Abtasten der Oberfläche erfolgt, und zum Empfang des an der Füllgutoberfläche reflektierten Messsignals;
   **dadurch gekennzeichnet, dass** das Füllstandmessgerät weiter eine Auswerteeinheit (301) aufweist zum Bestimmen der Topologie der Oberfläche des Füllgutes oder Schüttgutes aus dem empfangenen, an der Füllgutoberfläche reflektierten Messsignal (306) und einem Abstand eines Ursprungs (304) des Messsignals von einem Drehzentrum (303) der Hauptabstrahlachse, wobei die Auswerteeinheit dabei zur Kompensation der Eigenschaft, dass der Ursprung (304) des Messsignals nicht im Drehzentrum (303) der Hauptabstrahlachse (103) liegt, ausgeführt ist.

**2.** Füllstandmessgerät nach Anspruch 1,
wobei die Kompensation durch mathematische Transformation erfolgt.

**3.** Füllstandmessgerät nach einem der vorhergehenden Ansprüche,
wobei das Füllstandmessgerät zur Rotation der Hauptabstrahlachse (103) um eine Drehachse (302) der Hauptabstrahlachse ausgeführt ist, welche das Drehzentrum (303) schneidet.

**4.** Füllstandmessgerät nach einem der vorhergehenden Ansprüche,
weiter aufweisend eine Eingabeeinrichtung zur benutzerseitigen Eingabe des Abstands des Ursprungs (304) des Messsignals von dem Drehzentrum (303) der Hauptabstrahlachse (103).

**5.** Füllstandmessgerät nach einem der vorhergehenden Ansprüche,
wobei der Auswerteeinheit (301) der Abstand des Drehzentrums (303) zum Ursprung (304) des Messsignals in kartesischen Koordinaten vorliegt.

**6.** Füllstandmessgerät nach einem der vorhergehenden Ansprüche,
wobei das Füllstandmessgerät zur automatischen Bestimmung des Abstands des Ursprungs (304) des Messsignals vom Drehzentrum (303) der Hauptabstrahlachse bei bekannter Topologie der Oberfläche des Füllgutes oder Schüttgutes ausgeführt ist.

**7.** Füllstandmessgerät nach einem der vorhergehenden Ansprüche,
ausgeführt als FMCW Radar.

**8.** Füllstandmessgerät nach einem der vorhergehenden Ansprüche,
ausgeführt als ein Füllstandradar, das nach dem Puls-Laufzeitverfahren arbeitet.

**9.** Füllstandmessverfahren, welches zur Bestimmung des Füllstands eines Füllgutes oder Schüttgutes die Topologie einer Oberfläche des Füllgutes oder Schüttgutes bestimmt, das Verfahren aufweisend die Schritte:

Abstrahlen eines Messsignals (305) in Richtung der Oberfläche des Füllgutes oder Schüttgutes durch eine Antenneneinheit (102);
Verändern der Richtung einer Hauptabstrahlachse (103) der Antenneneinheit relativ zur Oberfläche, so dass ein Abtasten der Oberfläche erfolgt;
Empfangen des an der Füllgutoberfläche reflektierten Messsignals;
Bestimmen der Topologie der Oberfläche des Füllgutes oder Schüttgutes aus dem empfangenen, an der Füllgutoberfläche reflektierten Messsignal und einem Abstand eines Ursprungs (304) des Messsignals von einem Drehzentrum (303) der Hauptabstrahlachse;
Kompensieren der Eigenschaft, dass der Ursprung (304) des Messsignals nicht im Drehzentrum (303) der Hauptabstrahlachse (103) liegt.

**10.** Programmelement, das, wenn es auf einem Prozessor eines Füllstandmessgeräts ausgeführt wird, das Füllstandmessgerät veranlasst, die folgenden Schritte durchzuführen:

Abstrahlen eines Messsignals (305) in Richtung der Oberfläche des Füllgutes oder Schüttgutes durch eine Antenneneinheit (102);
Verändern der Richtung einer Hauptabstrahlachse (103) der Antenneneinheit relativ zur Oberfläche, so dass ein Abtasten der Oberfläche erfolgt;
Empfangen des an der Füllgutoberfläche reflektierten Messsignals;
Bestimmen der Topologie der Oberfläche des Füllgutes oder Schüttgutes aus dem empfangenen, an der Füllgutoberfläche reflektierten Messsignal und einem Abstand eines Ursprungs (304) des Messsignals von einem Drehzentrum (303) der Hauptabstrahlachse;
Kompensieren der Eigenschaft, dass der Ursprung (304) des Messsignals nicht im Drehzentrum (303) der Hauptabstrahlachse (103) liegt.

**11.** Computerlesbares Medium, auf dem ein Programmelement nach Anspruch 10 gespeichert ist.

# EP 3 137 857 B1

**Claims**

1. Fill level measurement device for determining a topology of a surface of a filling material or bulk material, the fill level measurement device (100) comprising:

   an antenna unit (102) configured to emit a measurement signal (305) towards the surface of the filling material or bulk material in a direction of a main emission axis (103) of the antenna unit relative to the surface, which direction can be changed by the fill level measurement device, in order to sample the surface, and configured to receive the measurement signal reflected at the filling material surface; **characterized in that** the fill level measurement device (100) comprises
   an evaluation unit (301) configured to determine the topology of the surface of the filling material or bulk material from the received measurement signal (306) reflected at the filling material surface and a distance between a source (304) of the measurement signal and a center of rotation (303) of the main emission axis,
   wherein the evaluation unit (301) is configured to compensate for the fact that the source (304) of the measurement signal does not lie in the center of rotation (303) of the main emission axis (103).

2. Fill level measurement device according to claim 1,
   wherein this compensation is carried out by means of mathematical transformation.

3. Fill level measurement device according to any of the preceding claims,
   wherein the fill level measurement device is configured to rotate the main emission axis (103) about an axis of rotation (302) thereof that intersects the center of rotation (303).

4. Fill level measurement device according to any of the preceding claims,
   further comprising an input apparatus for the user to input the distance between the source (304) of the measurement signal and the centre of rotation (303) of the main emission axis (103).

5. Fill level measurement device according to any of the preceding claims,
   wherein the distance between the centre of rotation (303) and the source (304) of the measurement signal is made available to the evaluation unit (301) in the form of Cartesian coordinates.

6. Fill level measurement device according to any of the preceding claims,
   wherein the fill level measurement device is configured to automatically determine the distance between the source (304) of the measurement signal and the center of rotation (303) of the main emission axis when the topology of the surface of the filling material or bulk material is known.

7. Fill level measurement device according to any of the preceding claims,
   designed as an FMCW radar.

8. Fill level measurement device according to any of the preceding claims,
   designed as a fill level radar that works according to the pulse time-of-flight method.

9. Fill level measurement method which determines the topology of a surface of the filling material or bulk material in order to determine the fill level of a filling material or bulk material, the method comprising the steps of:

   emitting a measurement signal (305) towards the surface of the filling material or bulk material by means of an antenna unit (102);
   changing the direction of a main emission axis (103) of the antenna unit relative to the surface in order to sample the surface;
   receiving the measurement signal reflected at the filling material surface;
   determining the topology of the surface of the filling material or bulk material from the received measurement signal reflected at the filling material surface and a distance between a source (304) of the measurement signal and a centre of rotation (303) of the main emission axis;
   compensating for the fact that the source (304) of the measurement signal does not lie in the center of rotation (303) of the main emission axis (103).

10. Program element which, when executed on a processor of a fill level measurement device, instructs the fill level measurement device to carry out the following steps:

emitting a measurement signal (305) towards the surface of the filling material or bulk material by means of an antenna unit (102);

changing the direction of a main emission axis (103) of the antenna unit relative to the surface in order to sample a surface;

receiving the measurement signal reflected at the filling material surface;

determining the topology of the surface of the filling material or bulk material from the received measurement signal reflected at the filling material surface and a distance between a source (304) of the measurement signal and a centre of rotation (303) of the main emission axis;

compensating for the fact that the source (304) of the measurement signal does not lie in the center of rotation (303) of the main emission axis (103).

**11.** Computer-readable medium, on which a program element according to claim 10 is stored.

**Revendications**

**1.** Appareil de mesure de niveau de remplissage pour déterminer une topologie d'une surface d'un produit de remplissage ou d'un produit en vrac, l'appareil de mesure de niveau de remplissage (100) présentant :

une unité d'antenne (102) pour émettre un signal de mesure (305) en direction de la surface du produit de remplissage ou du produit en vrac dans une direction d'un axe de rayonnement principal (103) de l'unité d'antenne par rapport à la surface, laquelle direction peut être modifiée par l'appareil de mesure de niveau de remplissage de sorte qu'un balayage de la surface ait lieu, et pour recevoir le signal de mesure réfléchi à la surface du produit de remplissage ;

**caractérisé en ce que** l'appareil de mesure de niveau de remplissage présente en outre une unité d'évaluation (301) pour déterminer la topologie de la surface du produit de remplissage ou du produit en vrac à partir du signal de mesure reçu (306) réfléchi à la surface du produit de remplissage et d'une distance d'une origine (304) du signal de mesure par rapport à un centre de rotation (303) de l'axe de rayonnement principal, l'unité d'évaluation étant conçue pour compenser le fait que l'origine (304) du signal de mesure n'est pas située au centre de rotation (303) de l'axe de rayonnement principal (103).

**2.** Appareil de mesure de niveau de remplissage selon la revendication 1, dans lequel la compensation est effectuée par transformation mathématique.

**3.** Appareil de mesure de niveau de remplissage selon l'une des revendications précédentes, dans lequel l'appareil de mesure de niveau de remplissage est conçu pour faire tourner l'axe de rayonnement principal (103) autour d'un axe de rotation (302) de l'axe de rayonnement principal qui coupe le centre de rotation (303).

**4.** Appareil de mesure de niveau de remplissage selon l'une des revendications précédentes, présentant en outre un moyen d'entrée pour permettre à un utilisateur d'entrer la distance de l'origine (304) du signal de mesure par rapport au centre de rotation (303) de l'axe de rayonnement principal (103).

**5.** Appareil de mesure de niveau de remplissage selon l'une des revendications précédentes, dans lequel la distance du centre de rotation (303) par rapport à l'origine (304) du signal de mesure est fournie à l'unité d'évaluation (301) en coordonnées cartésiennes.

**6.** Appareil de mesure de niveau de remplissage selon l'une des revendications précédentes, dans lequel l'appareil de mesure de niveau de remplissage est conçu pour déterminer automatiquement la distance de l'origine (304) du signal de mesure par rapport au centre de rotation (303) de l'axe de rayonnement principal lorsque la topologie de la surface du produit de remplissage ou du produit en vrac est connue.

**7.** Appareil de mesure de niveau de remplissage selon l'une des revendications précédentes, lequel est conçu comme un radar FMCW.

**8.** Appareil de mesure de niveau de remplissage selon l'une des revendications précédentes, lequel est conçu comme un radar de niveau de remplissage qui fonctionne selon le procédé de mesure du temps de transit d'une d'impulsion.

**9.** Procédé de mesure de niveau de remplissage qui détermine la topologie d'une surface d'un produit de remplissage ou d'un produit en vrac pour déterminer le niveau de remplissage du produit de remplissage ou du produit en vrac, le procédé présentant les étapes suivantes :

émission d'un signal de mesure (305) en direction de la surface du produit de remplissage ou du produit en vrac par une unité d'antenne (102) ;

modification de la direction d'un axe de rayonnement principal (103) de l'unité d'antenne par rapport à la surface de sorte qu'un balayage de la surface ait lieu ;

réception du signal de mesure réfléchi à la surface du produit de remplissage ;

détermination de la topologie de la surface du produit de remplissage ou du produit en vrac à partir du signal de mesure reçu, réfléchi à la surface du produit de remplissage et d'une distance d'une origine (304) du signal de mesure par rapport à un centre de rotation (303) de l'axe principal de rayonnement ;

compensation du fait que l'origine (304) du signal de mesure n'est pas située au centre de rotation (303) de l'axe principal de rayonnement (103).

**10.** Élément de programme qui, lorsqu'il est exécuté sur un processeur d'un appareil de mesure de niveau de remplissage, amène l'appareil de mesure de niveau de remplissage à exécuter les étapes suivantes :

émission d'un signal de mesure (305) en direction de la surface du produit de remplissage ou du produit en vrac par une unité d'antenne (102) ;

modification de la direction d'un axe de rayonnement principal (103) de l'unité d'antenne par rapport à la surface de sorte qu'un balayage de la surface ait lieu ;

réception du signal de mesure réfléchi à la surface du produit de remplissage ;

détermination de la topologie de la surface du produit de remplissage ou du produit en vrac à partir du signal de mesure reçu, réfléchi à la surface du produit de remplissage et d'une distance d'une origine (304) du signal de mesure par rapport à un centre de rotation (303) de l'axe principal de rayonnement ;

compensation du fait que l'origine (304) du signal de mesure n'est pas située au centre de rotation (303) de l'axe principal de rayonnement (103).

**11.** Support lisible par ordinateur sur lequel est stocké un élément de programme selon la revendication 10.

**Fig. 1**

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2128576 A
- US 20100019952 A